# EUROPEAN PATENT SPECIFICATION

(11) **EP 3 841 440 B1**
(45) Date of publication and mention of the grant of the patent: **24.05.2023**
(21) Application number: 18800514.4
(22) Date of filing: 25.10.2018
(51) Int. Cl.: G05B 19/418, B25J 9/16

(54) **A METHOD FOR COMPUTER-IMPLEMENTED DETERMINATION OF SENSOR POSITIONS IN A SIMULATED PROCESS OF AN AUTOMATION SYSTEM**
VERFAHREN ZUR RECHNERGESTÜTZTEN BESTIMMUNG VON SENSORPOSITIONEN IN EINEM SIMULIERTEN PROZESS EINES AUTOMATISIERUNGSSYSTEMS
PROCÉDÉ DE DÉTERMINATION INFORMATIQUE DE POSITIONS DE CAPTEUR DANS UN PROCESSUS SIMULÉ D'UN SYSTÈME D'AUTOMATISATION

(43) Date of publication of application: 30.06.2021
(73) Proprietor: Siemens Aktiengesellschaft, 80333 München (DE)
(72) Inventor: JORDAN, Lars, 85586 Poing (DE); MAYER, Hermann Georg, 83209 Prien am Chiemsee (DE)
(74) Representative: Siemens Patent Attorneys
(86) International application number: PCT/EP2018/079277
(87) International publication number: WO 2020/083490

(56) References cited:
- US-A1- 2002 169 586
- US-A1- 2013 226 353
- US-A1- 2018 117 760

## Description

The invention refers to a method for computer-implemented determination of sensor positions in a simulated process of an automation system.

The publication US 2002/0169586 A1 - Rankin, II et al. "AUTOMATED CAD GUIDED SENSOR PLANNING PROCESS" discloses a method of automatically determining one or more sensor locations for sensing a surface of a physical part based on CAD models of both the sensor and the sensing surface.

The document US 2018/117760 A1 - Lim et al. "ROBOTIC SENSING APPARATUS AND METHODS OF SENSOR PLANNING" shows a method and an apparatus for planning of a sensor planning for acquiring a plurality of samples with a robotic device.

The publication US 2013/0226353 A1 - Park "APPARATUS AND METHOD FOR AUTOMATICALLY CONFIGURING SENSOR TO CONFIGURE BUILDING ENERGY MANAGEMENT SYSTEM" discloses a sensor disposition unit to calculate a position for the sensor to be disposed in the building based on the input information on the building, the sensor, and the allocated budget.

Sensors in automation systems, like manufacturing plants, become more and more complex. Particularly, the geometric dimensions and sensing restrictions of sensors have increased by employing camera systems or by using combined sensors to enable sensor fusion. Hence, for processes of an automation system simulated on a computer, there is a need to analyze those processes in order to determine whether the placement of corresponding sensors for performing a predetermined sensor task is possible at all within the respective process.

Therefore, it is an object of the invention to provide a computer-implemented method which enables to determine possible sensor positions for performing a sensing task in a simulated process of an automation system.

In the method according to the invention, the simulated process of the automation system includes a digital process description of an automation task to be executed by a number of components of the automation system. In a preferred embodiment, the number of components comprises at least one robot. The process description includes a movement specification describing the movement of the number of components during the execution of the automation task. The movement specification may be provided based on a kinematic model of the number of components. Such movement specifications are known per se from the prior art. The method of the invention also processes a digital sensing description, where the sensing description defines a sensing task to be performed by a sensor means (e.g. the detection of a specific object at a predetermined position within an automation cell) as well as a number of sensor parameters of the sensor means. E.g., the sensor means may comprise at least one camera for detecting one or more objects handled by the number of components. The number of sensor parameters comprises one or more sensing constraints of the sensor means. A sensing constraint may be described by a condition which has to be fulfilled so that the sensing task can be performed. In the case of a camera, a sensing constraint may refer to the focal length of the camera where the camera has to be placed within a spherical shell around the object to be detected where the spherical shell includes as a radius the focal length of the camera.

In a step a) of the method according to the invention, a placement volume based on the movement specification is determined, where the placement volume lies within a predetermined area surrounding the number of components. This area may e.g. be the volume of an automation cell of an automation system where the simulated process is executed within the automation cell. Furthermore, the placement volume does not overlap with the number of components and any other object (excluding the sensor) during the execution of the automation task.

In a step b) of the method according to the invention, a sensor arrangement volume is determined, where the sensor arrangement volume defines a volume of sensor positions of the sensor means. The sensor positions may e.g. be defined based on the center of gravity of the sensor means. The sensor arrangement volume is defined such that the sensor volume of the sensor means lies at each sensor position within the sensor arrangement volume completely inside the placement volume and that the sensing task can be performed during the execution of the automation task at each sensor position within the sensor arrangement volume by the sensor means with regard to the number of sensing constraints.

The method of the invention provides a straight forward computer-implemented method for determining possible sensor positions by calculating a volume not covered by the components of the automation system. Hence, it is guaranteed that the volume of the sensor means does not interfere with the components of the automation system. Furthermore, the method considers sensing constraints given for the respective sensor means in order to ensure that the sensing task can indeed be performed at a respective sensor position. Preferably, a warning is output via a user interface and particularly via a visual user interface in case that a sensor arrangement volume cannot be identified by the method of the invention.

In a preferred variant of the invention, at least one sensor position is identified within the sensor arrangement volume based on one or more optimization criteria. Those optimization criteria may be defined differently depending on the circumstances. E.g., an optimization criterion may be a short cable length connecting the sensor with a plug or an optimization criterion may refer to a good accessibility of the position for mounting the sensor means. According to this embodiment, preferred sensor positions within the sensor arrangement volume are determined based on desired criteria.

In a particularly preferred embodiment, the sensor arrangement volume and/or the at least one sensor position identified by optimization criteria are output via a user interface. Particularly, this information is shown on a visual user interface, e.g. a display. Preferably, the visualized sensor arrangement volume and/or the at least one visualized sensor position are highlighted within a picture showing the relevant components of the automation system.

In a preferred embodiment of the invention, the determination of the sensor arrangement volume based on the above step b) comprises the following sub-steps:
- determining an intermediate volume defining a volume of sensor positions of the sensor means, where at each sensor position within the intermediate volume the sensing task can be performed by the sensor means with regard to the number of sensing constraints without considering the placement volume;
- determining the intersection between the intermediate volume and the placement volume;
- determining as the sensor arrangement volume that area within the intersection where the sensing task can be performed by the sensor means with regard to the number of sensing constraints considering the placement volume (e.g. no obstructions in the detection area of the sensor during sensing) and where the sensor volume lies completely within the placement volume.

In another particularly preferred embodiment, additional steps are performed in case that a sensor arrangement volume cannot be identified in step b). Those steps enable to determine sensor positions under the assumption that the sensor means is movable. The embodiment comprises the following steps:
- associating with the sensor means a mechanical mechanism for moving the sensor means, the sensor means and the mechanical mechanism forming a movable sensor platform, where an operation time is assigned to the movable sensor platform, the operation time being the time for moving the sensor means from a first position (e.g. an idle position) to a second position which is a sensing position, performing the sensing task by the sensor means in the sensing position and moving back the sensor means to the idle position;
- determining a movement volume of the movable sensor platform, the movement volume being the volume covered by the movable sensor platform during the operation time of the movable sensor platform;
- dividing the automation task into a plurality of subsequent sub-tasks, each sub-task being associated with a sub-task time needed to execute the sub-task.

For each sub-task having a sub-task time greater than or equal to the operation time of the movable sensor platform, the following sub-steps are performed:
- determining for the respective sub-task a sub-task placement volume based on that part of the movement specification which describes the movement of the number of components during the execution of the respective sub-task, where the sub-task placement volume lies within the predetermined area surrounding the number of components and where the sub-task placement volume does not overlap with the number of components and any other object (excluding the sensor platform) during the execution of the respective sub-task;
- determining one or more mount positions of the movable sensor platform, where at each mount position the movement volume of the movable sensor platform lies completely within the respective sub-task placement volume and the sensing task can be performed during the execution of the respective sub-task by the sensor means with regard to the number of sensing constraints.

By considering the movement of the sensor means by a mechanical mechanism and by dividing an automation task in sub-tasks, valid sensor positions in the form of mount positions of a movable sensor platform may be found according to this embodiment.

In a preferred variant of the above embodiment, at least one mount position is identified within the determined one or more mount positions based on one or more optimization criteria. The optimization criteria may be the same criteria as described above, e.g. the optimization criteria may refer to a short cable length or to a good accessibility of the sensor platform.

In another preferred embodiment, the one or more determined mount positions for one or more sub-tasks and/or the at least one identified mount position determined based on one or more optimization criteria are output via a user interface. Particularly, those positions are visualized on a visual user interface.

The method of the invention may be applied to simulated processes of different automation systems. Particularly, the automation system may be a production system for producing or manufacturing a product, e.g. an assembly line. Furthermore, the automation system may be a packaging plant or a logistic system.

Besides the above method, the invention refers to an apparatus for computer-implemented determination of sensor positions in a simulated process of an automation system, where the apparatus is configured to perform the method of the invention or the method of one or more preferred embodiments of the invention. In other words, the apparatus comprises a computing means for performing the method of the invention or the method according to one or more preferred embodiments of the invention.

The invention also refers to a computer program product with program code, which is stored on a machine-readable carrier, for carrying out the method according to the invention or the method according to one or more preferred embodiments of the invention when the program code is executed on a computer.

Furthermore, the invention refers to a computer program with program code for carrying out the method of the invention or the method according to one or more preferred embodiments of the invention when the program code is executed on a computer.

In the following, embodiments of the invention will be described in detail with respect to the accompanying drawings, wherein:
- Fig. 1: is a flowchart illustrating a first embodiment of the invention;
- Fig. 2 to Fig. 6: are schematic views illustrating the steps performed by the first embodiment of the invention;
- Fig. 7: is a flowchart illustrating a second embodiment of the invention; and
- Fig. 8 to Fig. 10: are schematic views illustrating the steps performed by the second embodiment of the invention.

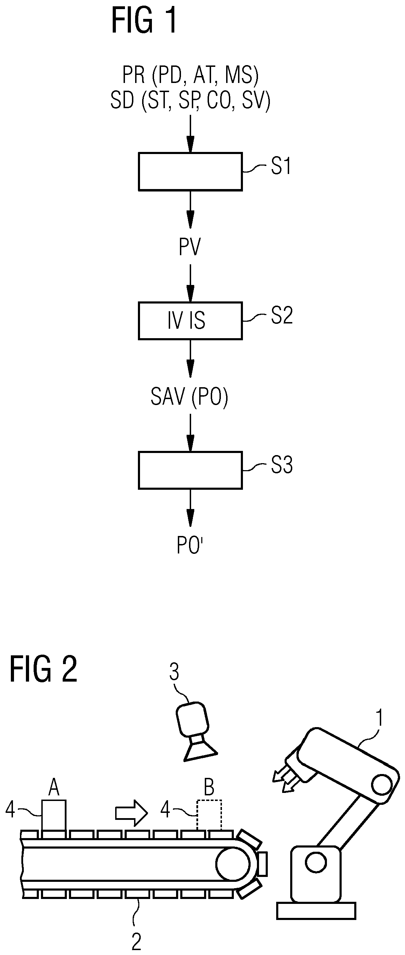

A first embodiment of the invention will be described based on a simulated process in an automation system where the simulated process refers to an automation task handled by a robot. The automation task is illustrated in Fig. 2 which shows a robot 1 at the end of a conveyor belt 2. An object 4 is transported by the conveyor belt from a position A to a position B where the object is shown in position B by a dotted line. The robot 1 shall grip the object 4 in position B and move the object to another position.

According to the first embodiment, a suitable position of a sensor 3 in the form of a camera shall be determined so that the object 4 can be detected in position B and the sensor 3 does not interfere with the robot 1. In order to determine such a position, a computer program is executed on a computer which uses digital data describing the simulated process.

According to Fig. 1, the simulated process is designated as PR and comprises a digital process description PD specifying the automation task AT explained above with respect to Fig. 2. The process description PD includes a movement specification MS describing the movement of the robot 1 as well as of the conveyor belt 2. The computer program receives the above process description PD as input data. Furthermore, the computer program receives as input data a digital sensing description SD which defines a sensing task ST which refers to the detection of the object 4 at position B as shown in Fig. 2. Furthermore, the sensing description includes sensor parameters SP of the sensor 3 comprising sensing constraints CO of the sensor 3 as well as the volume SV of the sensor 3. In the embodiment described herein, the sensing constraints CO are given by a spherical shell around the object 4 in position B where the spherical shell comprises a radius (i.e. a distance to the object 4 in position B) which corresponds to the focal length of the camera. In case that the sensor position (e.g. the center of gravity of the sensor) is within the spherical shell, the object 4 at position B can be detected in case that there is no obstruction by the robot 1 or the conveyor belt 2.

Based on the above input data, the first embodiment of the invention performs step S1 of Fig. 1. According to this step, a placement volume PV is calculated based on the movement specification MS, where the placement volume lies within a robot cell comprising the robot 1 and the conveyor belt 2 of Fig. 2. The placement volume PV is defined such that it does not overlap with the robot 1, the conveyor belt 2 and the object 4 during the execution of the automation task AT.

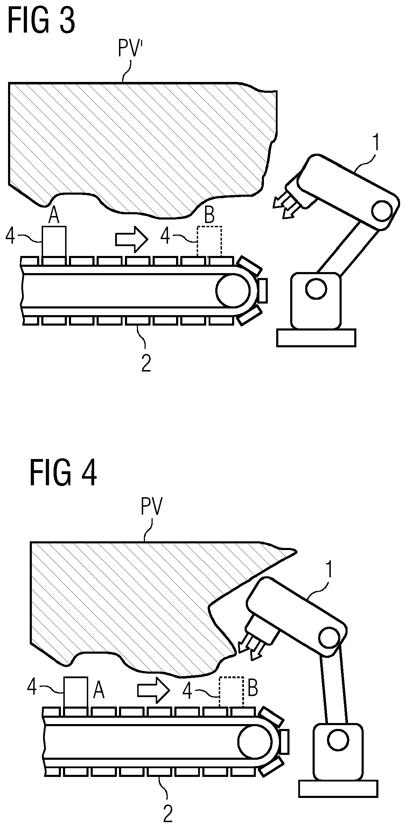

The determination of the placement volume PV is illustrated in Fig. 3 and Fig. 4. According to Fig. 3, at first an intermediate volume PV' is calculated which is the volume with free sight on the object 4. Thereafter, the swept volume during the movement of the robot 1 is calculated and subtracted from the volume PV' resulting in the placement volume PV shown in Fig. 4. The calculation of the swept volume can be performed by methods known from the prior art. E.g., the kinematic chain of the moving parts of the robot may be described by a directed graph structure with rigid bodies assigned to nodes of a tree. Articulated junctions between those rigid bodies are represented by edges connecting the nodes. The nodes comprise parameters describing the respective junction. Using such a kinematic model, the swept volume is defined by the union of all geometric configurations of the rigid bodies over time.

After having calculated the placement volume PV, the method of Fig. 1 performs step S2 which determines a sensor arrangement volume SAV defining a volume of sensor positions PO of the sensor 3 where the sensor volume SV of the sensor 3 lies at each sensor position of the sensor arrangement volume SAV completely within the placement volume PV and where the sensing task ST can be performed during the execution of the automation task AT at each sensor position within the sensor arrangement volume SAV by the sensor 3 taking into account the sensing constraints CO.

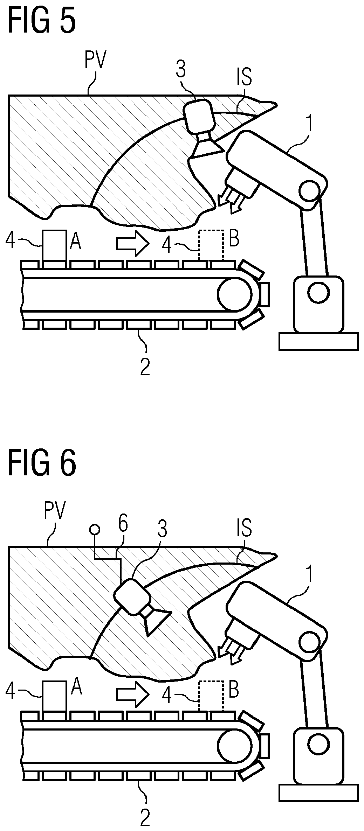

In order to calculate the sensor arrangement volume SAV, an intermediate volume IV is determined. This is illustrated in Fig. 5. The intermediate volume refers to the above described spherical shell where the part of the spherical shell within the placement volume PV is indicated by reference numeral IS in Fig. 5. After having determined the intermediate volume IV, this volume is intersected with the placement volume PV resulting in the intersection IS. At all positions within the intersection IS, the sensing task of sensing the object 4 at position B can be performed assuming that the robot 1 and the conveyor belt 2 are absent. In a next step, the sensor arrangement volume SAV comprising the positions PO is determined as those positions within the section IS where during the automation task AT the sensing task ST of the sensor 3 can be performed with regard to the sensing constraints CO considering the placement volume PV (i.e. no obstructions in the detection area of the sensor during sensing) and where the sensor volume SV lies completely within the placement volume PV. Those positions can be visualized on a visual or graphical user interface showing the scenario of Fig. 5 and additionally highlighting the sensor volume SAV.

Optionally, the additional step S3 shown in Fig. 1 can be performed. According to this step, positions PO' out of the positions PO of the sensor arrangement volume SAV are selected based on one or more optimization criteria. A variant of step S3 is illustrated in Fig. 6. As shown therein, the optimization criterion refers to the length of the cable 6 connecting the sensor with a plug. The optimization criterion is such that the length of the cable lies under a predetermined threshold at the respective positions PO'. Analogously to the positions PO, the positions PO' may be visualized in an image shown on a graphical user interface, e.g. by highlighting the positions PO' shown in the scenario of Fig. 6.

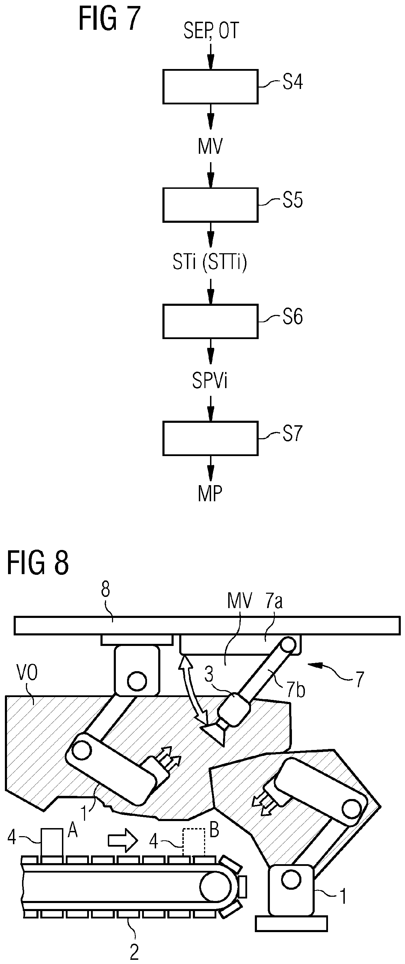

In case that no positions PO can be found by the method of Fig. 1, a corresponding message indicating that there are no such positions is output via a user interface. However, in another embodiment described with respect to Fig. 7, additional steps are performed in case that no positions PO can be found.

The steps shown in Fig. 7 are applied to the scenario shown in Fig. 8 to Fig. 10. This scenario slightly differs from the scenario of Figs. 2 to 6 due to the fact that two robots 1 are used for handling the object 4. Nevertheless, the steps shown in Fig. 7 may analogously be applied to the scenario of Fig. 2 to Fig. 6.

As illustrated in Figs. 8 to 10, it is assumed that the sensor 3 may be moved by a mechanical mechanism 7 which is mounted on the ceiling 8 lying above the robots 1 and the conveyor belt 2. The mechanical mechanism comprises an arm 7a attached to the ceiling as well as an arm 7b pivotally mounted to the arm 7a where the sensor 3 is attached to the free end of the arm 7b. The sensor 3 can be positioned in a retracted or idle position where the arm 7b extends parallel to the arm 7a so that the sensor lies adjacent to the ceiling 8. From this retracted position, the sensor 3 can be moved by rotating the arm 7b to the sensing position which is shown in each of the Figs. 8 to 10. The movement of the sensor 3 is indicated by a double arrow in Figs. 8 to 10. The sensor 3 and the mechanical mechanism 7 form a moveable sensor platform which is designated as SEP in Fig. 7.

A digital description of the sensor platform SEP including the idle position and the sensing position as well as an operation time OT is used as input data in step S4 of Fig. 7. The operation time is the time for moving the sensor 3 from the idle position to the sensing position, performing the sensing task by the sensor 3 in the sensing position and moving back the sensor 3 to the idle position.

In step S4 of Fig. 7, a movement volume MV of the movable sensor platform SEP is determined, where the movement volume is the volume covered by the movable sensor platform SEP during the operation time OT of the movable sensor platform. This movement volume MV is shown in Figs. 8 to 10 and refers to the circle segment described by the double arrow included in Figs. 8 to 10. The movement volume MV is processed by step S5 of Fig. 7. In this step, the original automation task AT is divided into a plurality of subsequent sub-tasks which are designated as STi in Fig. 7 (i = 1, ..., N, where N is the total number of sub-tasks describing the automation task AT). Each sub-task is associated with a sub-task time STTi needed to execute the sub-task.

Those sub-tasks STi having a sub-task time STTi greater than or equal to the operation time OT are processed in step S6. In this step, a sub-task placement volume SPVi is determined for the respective sub-task based on that part of the movement specification MS which describes the movement of the robots 1 and the conveyor belt 2 during the execution of the respective sub-task. The sub-task placement volume is the volume which does not overlap with the robots 1 and the conveyor belt 2 and any other object (excluding the sensor platform) during the execution of the respective sub-task STi.

Figs. 8 to 10 show the determination of the sub-task placement volumes for different sub-tasks. In those figures, the volume VO is the swept volume covered by both robots 1 during their movement for performing the respective sub-task. The sub-task volume is the free volume excluding the volume VO and excluding the volume of all other objects assuming that the sensor platform 7 is not present. The volume VO is different for the sub-tasks of Figs. 8 to 10 because the performed sub-tasks are different.

After having determined the respective sub-task volumes SPVi, a search for mount positions MP of the mechanical mechanism 7 at the ceiling 8 is performed in step S7. In a respective mount position, the movement volume MV of the movable sensor platform lies completely within the respective sub-task placement volume SPVi and the sensing task can be performed during the execution of the respective sub-task STi by the sensor 3 with regard to the sensing constraints CO. The search for the mount position can be performed by analyzing different mount positions in order to evaluate whether the sensing task can be performed at the respective mount position. This step of analyzing respective mount positions uses the same methods as the determination of the sensor arrangement volume described with respect to the first embodiment. The mount positions found after having performed step S7 are designated as MP in Fig. 1. Those positons MP can be visualized on a visual or graphical user interface, e.g. in an image where the respective mount positions MP are highlighted. In case that no mount positions can be found, a corresponding message will appear on the user interface in order to inform the user that the sensing task cannot be performed at all.

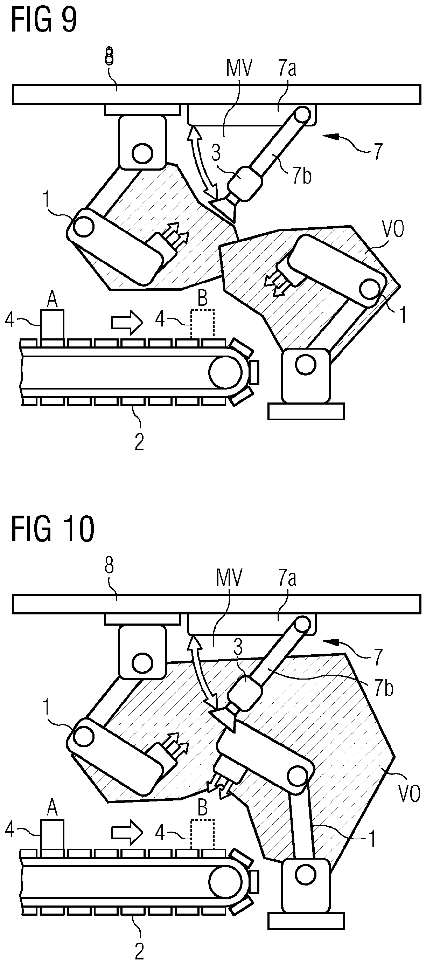

Figs. 8 to 10 show the evaluation of one mount position with respect to the condition that the movable volume MV shall lie completely within the sub-task placement volume. Evidently, only for the sub-task of Fig. 9, this condition is fulfilled so that only the mount position in this sub-task is a candidate for a mount position MP.

The invention as described in the foregoing has several advantages. Particularly, a powerful decision-making model is provided which incorporates the domain knowledge of experts in a formalized way by describing a general technical method for placing sensors. The invention is implemented as a computer program and enables non-experts to identify possible sensor positions for a sensing task within an automation system by running the computer program.

The formalized determination of sensor locations leads to a repeatable, exact and correct solution for performing a sensing task. The proposed formalization includes technical features like the observable state of an automation system and explicit parameters of the sensor itself, like the focal length or the acquisition field of a camera. Furthermore, the dynamic behavior of the components of the automation system is taken into account by determining swept volumes covered by the components. The method of the invention can hardly be reproduced in such accuracy by manual engineering. Furthermore, in a preferred embodiment, it is also possible to consider the scenario of a movable sensor platform in case those static sensor locations for the sensing task cannot be found.

## Claims

1. A method for computer-implemented determination of sensor positions (PO) in a simulated process (PR) of an automation system, where the simulated process (PR) includes a digital process description (PD) of an automation task (AT) to be executed by a number of components (1, 2) of the automation system,
**characterized in**
the process description (PD) including a movement specification (MS) describing the movement of the number of components (1, 2) during the execution of the automation task (AT), and where a digital sensing description (SD) is provided, the sensing description (SD) defining a sensing task (ST) to be performed by a sensor means (3) during the execution of the automation task (AT) and a number of sensor parameters (SP) of the sensor means (3), the number of sensor parameters (SP) comprising one or more sensing constraints (CO) of the sensor means (3) and the sensor volume (SV) of the sensor means (3), the method comprising the steps of:
a) determining a placement volume (PV) based on the movement specification (MS), where the placement volume (PV) lies within a predetermined area surrounding the number of components (1, 2) and where the placement volume (PV) does not overlap with the number of components (1, 2) and any other object (4) during the execution of the automation task (AT);
b) determining a sensor arrangement volume (SAV) defining a volume of sensor positions (PO) of the sensor means (3), where the sensor volume (SV) of the sensor means (3) lies at each sensor position (PO) within the sensor arrangement volume (SAV) completely inside the placement volume (PV) and where the sensing task (ST) can be performed during the execution of the automation task (AT) at each sensor position (PO) within the sensor arrangement volume (SAV) by the sensor means (3) with regard to the number of sensing constraints (CO).

2. The method according to claim 1, wherein at least one sensor position (PO') is identified within the sensor arrangement volume (SAV) based on one or more optimization criteria.

3. The method according to claim 1 or 2, wherein the sensor arrangement volume (SAV) and/or the at least one sensor position (PO') are output via a user interface.

4. The method according to one of the preceding claims, wherein the number of components (1, 2) comprises at least one robot (1) and/or the sensor means (3) comprises at least one optical sensor, particularly at least one camera, for detecting one or more objects (4) handled by the number of components (1, 2).

5. The method according to one of the preceding claims, wherein the determination of the sensor arrangement volume (SAV) based on step b) comprises the following sub-steps:
- determining an intermediate volume (IV) defining a volume of sensor positions of the sensor means (3), where at each sensor position within the intermediate volume (IV) the sensing task (ST) can be performed by the sensor means (3) with regard to the number of sensing constraints (CO) without considering the placement volume (PV);
- determining the intersection (IS) between the intermediate volume (IV) and the placement volume (PV);
- determining as the sensor arrangement volume (SAV) that area within the intersection (IS) where the sensing task (ST) can be performed by the sensor means (3) with regard to the number of sensing constraints (CO) considering the placement volume (PV)and where the sensor volume (SV) lies completely within the placement volume (PV).

6. The method according to one of the preceding claims, wherein, in case that a sensor arrangement volume (SAV) cannot be identified in step b), the following steps are performed:
- associating with the sensor means (3) a mechanical mechanism (7) for moving the sensor means (3), the sensor means (3) and the mechanical mechanism (7) forming a movable sensor platform (SEP), where an operation time (OT) is assigned to the movable sensor platform (SEP), the operation time (OT) being the time for moving the sensor means (3) from a first position to a second position which is a sensing position, performing the sensing task (ST) by the sensor means (3) in the sensing position and moving back the sensor means(3) to the idle position;
- determining a movement volume (MV) of the movable sensor platform (SEP), the movement volume (MV) being the volume covered by the movable sensor platform (SEP) during the operation time (OT) of the movable sensor platform (SEP);
- dividing the automation task (AT) into a plurality of subsequent sub-tasks (STi), each sub-task (STi) being associated with a sub-task time (STTi) needed to execute the sub-task (STTi), where the following steps are performed for each sub-task (STi) having a sub-task time (STTi) greater than or equal to the operation time (OT) of the movable sensor platform (SEP):
- determining for the respective sub-task (STi) a sub-task placement volume (SPVi) based on that part of the movement specification (MS) which describes the movement of the number of components (1, 2) during the execution of the respective sub-task (STi), where the sub-task placement volume (SPVi) lies within the predetermined area surrounding the number of components (1, 2) and where the sub-task placement volume (SPVi) does not overlap with the number of components (1, 2) and any other object (4) during the execution of the respective sub-task (STi);
- determining one or more mount positions (MP) of the movable sensor platform (SEP), where at each mount position (MP) the movement volume (MV) of the movable sensor platform (SEP) lies completely within the respective sub-task placement volume (SPVi) and the sensing task (ST) can be performed during the execution of the respective sub-task (STi) by the sensor means (3) with regard to the number of sensing constraints (CO).

7. The method according to claim 6, wherein at least one mount position (MP) is identified within the determined one or more mount positions (MP) based on one or more optimization criteria.

8. The method according to claim 6 or 7, wherein the one or more determined mount positions (MP) for one or more sub-tasks (STi) and/or the at least one identified mount position (MP) are output via a user interface.

9. The method according one of the preceding claims, wherein the automation system is a production system or a packaging plant or a logistic system.

10. An apparatus for computer-implemented determination of sensor positions (PO) in a simulated process (PR) of an automation system, where the simulated process (PR) includes a digital process description (PD) of an automation task (AT) to be executed by a number of components (1, 2) of the automation system,
**characterized in**
the process description (PD) including a movement specification (MS) describing the movement of the number of components (1, 2) during the execution of the automation task (AT), and where a digital sensing description (SD) is provided, the sensing description (SD) defining a sensing task (ST) to be performed by a sensor means (3) during the execution of the automation task (AT) and a number of sensor parameters (SP) of the sensor means (3), the number of sensor parameters (SP) comprising one or more sensing constraints (CO) of the sensor means (3) and the sensor volume (SV) of the sensor means (3), where the apparatus is configured to perform a method comprising the steps of:
a) determining a placement volume (PV) based on the movement specification (MS), where the placement volume (PV) lies within a predetermined area surrounding the number of components (1, 2) and where the placement volume (PV) does not overlap with the number of components (1, 2) and any other object (4) during the execution of the automation task (AT);
b) determining a sensor arrangement volume (SAV) defining a volume of sensor positions (PO) of the sensor means (3), where the sensor volume (SV) of the sensor means (3) lies at each sensor position (PO) within the sensor arrangement volume (SAV) completely inside the placement volume (PV) and where the sensing task (ST) can be performed during the execution of the automation task (AT) at each sensor position (PO) within the sensor arrangement volume (SAV) by the sensor means (3) with regard to the number of sensing constraints (CO).

11. The apparatus according to claim 10, wherein the apparatus is configured to perform a method according to one of claims 2 to 9.

12. A computer program product with program code, which is stored on a machine-readable carrier, for carrying out a method according to one of claims 1 to 9 when the program code is executed on a computer.

13. A computer program with program code for carrying out a method according to one of claims 1 to 9 when the program code is executed on a computer.

## Patentansprüche

1. Verfahren für computerimplementierte Bestimmung von Sensorpositionen (PO) in einem simulierten Prozess (PR) eines Automatisierungssystems, wobei der simulierte Prozess (PR) eine digitale Prozessbeschreibung (PD) einer Automatisierungsaufgabe (AT), die durch eine Anzahl von Komponenten (1, 2) des Automatisierungssystems auszuführen ist, enthält,
**dadurch gekennzeichnet, dass**
die Prozessbeschreibung (PD) eine Bewegungsspezifikation (MS) enthält, die die Bewegung der Anzahl von Komponenten (1, 2) während der Ausführung der Automatisierungsaufgabe (AT) beschreibt, und wobei eine digitale Erfassungsbeschreibung (SD) bereitgestellt ist, wobei die Erfassungsbeschreibung (SD) eine Erfassungsaufgabe (ST), die durch ein Sensormittel (3) während der Ausführung der Automatisierungsaufgabe (AT) durchzuführen ist, und eine Anzahl von Sensorparametern (SP) des Sensormittels (3) definiert, wobei die Anzahl von Sensorparametern (SP) eine oder mehrere Erfassungseinschränkungen (CO) des Sensormittels (3) und das Sensorvolumen (SV) des Sensormittels (3) umfasst, wobei das Verfahren die folgenden Schritte umfasst:
a) Bestimmen eines Platzierungsvolumens (PV) basierend auf der Bewegungsspezifikation (MS), wobei das Platzierungsvolumen (PV) innerhalb eines im Voraus bestimmten Bereichs, der die Anzahl von Komponenten (1, 2) umgibt, liegt, und wobei das Platzierungsvolumen (PV) mit der Anzahl von Komponenten (1, 2) und einem beliebigen anderen Objekt (4) während der Ausführung der Automatisierungsaufgabe (AT) nicht überlappt;
b) Bestimmen eines Sensoranordnungsvolumens (SAV), das ein Volumen von Sensorpositionen (PO) des Sensormittels (3) definiert, wobei das Sensorvolumen (SV) des Sensormittels (3) an jeder Sensorposition (PO) innerhalb des Sensoranordnungsvolumens (SAV) vollständig innerhalb des Platzierungsvolumens (PV) liegt und wobei die Erfassungsaufgabe (ST) während der Ausführung der Automatisierungsaufgabe (AT) an jeder Sensorposition (PO) innerhalb des Sensoranordnungsvolumens (SAV) durch das Sensormittel (3) in Bezug auf die Anzahl von Erfassungseinschränkungen (CO) durchgeführt werden kann.

2. Verfahren nach Anspruch 1, wobei mindestens eine Sensorposition (PO') innerhalb des Sensoranordnungsvolumens (SAV) basierend auf einem oder mehreren Optimierungskriterien identifiziert wird.

3. Verfahren nach Anspruch 1 oder 2, wobei das Sensoranordnungsvolumen (SAV) und/oder die mindestens eine Sensorposition (PO') über eine Benutzerschnittstelle ausgegeben werden.

4. Verfahren nach einem der vorhergehenden Ansprüche, wobei die Anzahl von Komponenten (1, 2) mindestens einen Roboter (1) umfasst und/oder das Sensormittel (3) mindestens einen optischen Sensor, insbesondere mindestens eine Kamera, zum Detektieren eines oder mehrerer Objekte (4), die durch die Anzahl von Komponenten (1, 2) gehandhabt werden, umfasst.

5. Verfahren nach einem der vorhergehenden Ansprüche, wobei die Bestimmung des Sensoranordnungsvolumens (SAV) basierend auf Schritt b) die folgenden Teilschritte umfasst:
- Bestimmen eines Zwischenvolumens (IV), das ein Volumen von Sensorpositionen des Sensormittels (3) definiert, wobei die Erfassungsaufgabe (ST) an jeder Sensorposition innerhalb des Zwischenvolumens (IV) durch das Sensormittel (3) in Bezug auf die Anzahl von Erfassungseinschränkungen (CO) durchgeführt werden kann, ohne das Platzierungsvolumen (PV) zu berücksichtigen;
- Bestimmen der Überschneidung (IS) zwischen dem Zwischenvolumen (IV) und dem Platzierungsvolumen (PV);
- Bestimmen des Bereichs innerhalb der Überschneidung (IS) als das Sensoranordnungsvolumen (SAV), wobei die Erfassungsaufgabe (ST) durch das Sensormittel (3) in Bezug auf die Anzahl von Erfassungseinschränkungen (CO) unter Berücksichtigung des Platzierungsvolumens (PV) durchgeführt werden kann und wobei das Sensorvolumen (SV) vollständig innerhalb des Platzierungsvolumens (PV) liegt.

6. Verfahren nach einem der vorhergehenden Ansprüche, wobei in einem Fall, in dem ein Sensoranordnungsvolumen (SAV) in Schritt b) nicht identifiziert werden kann, die folgenden Schritte durchgeführt werden:
- Assoziieren eines mechanischen Mechanismus (7) zum Bewegen des Sensormittels (3) mit dem Sensormittel (3), wobei das Sensormittel (3) und der mechanische Mechanismus (7) eine bewegbare Sensorplattform (SEP) bilden, wobei eine Betriebszeit (OT) der bewegbaren Sensorplattform (SEP) zugewiesen wird, wobei die Betriebszeit (OT) die Zeit zum Bewegen des Sensormittels (3) von einer ersten Position zu einer zweiten Position, die eine Erfassungsposition ist, Durchführen der Erfassungsaufgabe (ST) durch das Sensormittel (3) in der Erfassungsposition und Bewegen des Sensormittels (3) zurück zu der Ruheposition ist;
- Bestimmen eines Bewegungsvolumens (MV) der bewegbaren Sensorplattform (SEP), wobei das Bewegungsvolumen (MV) das Volumen ist, das durch die bewegbare Sensorplattform (SEP) während der Betriebszeit (OT) der bewegbaren Sensorplattform (SEP) abgedeckt wird;
- Aufteilen der Automatisierungsaufgabe (AT) in eine Vielzahl von anschließenden Teilaufgaben (STi), wobei jede Teilaufgabe (STi) mit einer Teilaufgabenzeit (STTi), die zum Ausführen der Teilaufgabe (STTi) benötigt wird, assoziiert ist, wobei die folgenden Schritte für jede Teilaufgabe (STi), die eine Teilaufgabenzeit (STTi) größer als die oder gleich der Betriebszeit (OT) der bewegbaren Sensorplattform (SEP) aufweist, durchgeführt werden:
- Bestimmen, für die jeweilige Teilaufgabe (STi), eines Teilaufgaben-Platzierungsvolumens (SPVi) basierend auf dem Teil der Bewegungsspezifikation (MS), der die Bewegung der Anzahl von Komponenten (1, 2) während der Ausführung der jeweiligen Teilaufgabe (STi) beschreibt, wobei das Teilaufgaben-Platzierungsvolumen (SPVi) innerhalb des im Voraus bestimmten Bereichs, der die Anzahl von Komponenten (1, 2) umgibt, liegt, und wobei das Teilaufgaben-Platzierungsvolumen (SPVi) mit der Anzahl von Komponenten (1, 2) und einem beliebigen anderen Objekt (4) während der Ausführung der jeweilige Teilaufgabe (STi) nicht überlappt;
- Bestimmen einer oder mehrerer Montagepositionen (MP) der bewegbaren Sensorplattform (SEP), wobei das Bewegungsvolumen (MV) der bewegbaren Sensorplattform (SEP) an jeder Montageposition (MP) vollständig innerhalb des jeweiligen Teilaufgaben-Platzierungsvolumens (SPVi) liegt und die Erfassungsaufgabe (ST) während der Ausführung der jeweiligen Teilaufgabe (STi) durch das Sensormittel (3) in Bezug auf die Anzahl von Erfassungseinschränkungen (CO) durchgeführt werden kann.

7. Verfahren nach Anspruch 6, wobei mindestens eine Montageposition (MP) innerhalb der bestimmten einen oder mehreren Montagepositionen (MP) basierend auf einem oder mehreren Optimierungskriterien identifiziert wird.

8. Verfahren nach Anspruch 6 oder 7, wobei die eine oder mehreren bestimmten Montagepositionen (MP) für eine oder mehrere Teilaufgaben (STi) und/oder die mindestens eine identifizierte Montageposition (MP) über eine Benutzerschnittstelle ausgegeben werden.

9. Verfahren nach einem der vorhergehenden Ansprüche, wobei das Automatisierungssystem ein Produktionssystem oder eine Verpackungsanlage oder ein Logistiksystem ist.

10. Vorrichtung für computerimplementierte Bestimmung von Sensorpositionen (PO) in einem simulierten Prozess (PR) eines Automatisierungssystems, wobei der simulierte Prozess (PR) eine digitale Prozessbeschreibung (PD) einer Automatisierungsaufgabe (AT), die durch eine Anzahl von Komponenten (1, 2) des Automatisierungssystems auszuführen ist, enthält,
**dadurch gekennzeichnet, dass**
die Prozessbeschreibung (PD) eine Bewegungsspezifikation (MS) enthält, die die Bewegung der Anzahl von Komponenten (1, 2) während der Ausführung der Automatisierungsaufgabe (AT) beschreibt, und wobei eine digitale Erfassungsbeschreibung (SD) bereitgestellt ist, wobei die Erfassungsbeschreibung (SD) eine Erfassungsaufgabe (ST), die durch ein Sensormittel (3) während der Ausführung der Automatisierungsaufgabe (AT) durchzuführen ist, und eine Anzahl von Sensorparametern (SP) des Sensormittels (3) definiert, wobei die Anzahl von Sensorparametern (SP) eine oder mehrere Erfassungseinschränkungen (CO) des Sensormittels (3) und das Sensorvolumen (SV) des Sensormittels (3) umfasst, wobei die Vorrichtung konfiguriert ist, ein Verfahren durchzuführen, das die folgenden Schritte umfasst:
a) Bestimmen eines Platzierungsvolumens (PV) basierend auf der Bewegungsspezifikation (MS), wobei das Platzierungsvolumen (PV) innerhalb eines im Voraus bestimmten Bereichs, der die Anzahl von Komponenten (1, 2) umgibt, liegt, und wobei das Platzierungsvolumen (PV) mit der Anzahl von Komponenten (1, 2) und einem beliebigen anderen Objekt (4) während der Ausführung der Automatisierungsaufgabe (AT) nicht überlappt;
b) Bestimmen eines Sensoranordnungsvolumens (SAV), das ein Volumen von Sensorpositionen (PO) des Sensormittels (3) definiert, wobei das Sensorvolumen (SV) des Sensormittels (3) an jeder Sensorposition (PO) innerhalb des Sensoranordnungsvolumens (SAV) vollständig innerhalb des Platzierungsvolumens (PV) liegt und wobei die Erfassungsaufgabe (ST) während der Ausführung der Automatisierungsaufgabe (AT) an jeder Sensorposition (PO) innerhalb des Sensoranordnungsvolumens (SAV) durch das Sensormittel (3) in Bezug auf die Anzahl von Erfassungseinschränkungen (CO) durchgeführt werden kann.

11. Vorrichtung nach Anspruch 10, wobei die Vorrichtung konfiguriert ist, ein Verfahren nach einem der Ansprüche 2 bis 9 durchzuführen.

12. Computerprogrammprodukt mit Programmcode, der in einem maschinenlesbaren Träger gespeichert ist, zum Ausführen eines Verfahrens nach einem der Ansprüche 1 bis 9, wenn der Programmcode auf einem Computer ausgeführt wird.

13. Computerprogramm mit Programmcode zum Ausführen eines Verfahrens nach einem der Ansprüche 1 bis 9, wenn der Programmcode auf einem Computer ausgeführt wird.

## Revendications

1. Procédé de détermination mis en oeuvre par ordinateur de positions (PO) d'un capteur dans une opération (PR) simulée d'un système d'automatisation, dans lequel l'opération (PR) simulée comprend une description (PD) numérique de l'opération d'une tâche (AT) d'automatisation à exécuter par un certain nombre de composants (1, 2) du système d'automatisation,
caractérisé dans
la description (PD) de l'opération comprenant une spécification (MS) de mouvement décrivant le mouvement du nombre de composants (1, 2) pendant l'exécution de la tâche (AT) d'automatisation, et dans lequel il est prévu une description (SD) numérique de détection, la description (SD) de détection définissant une tâche (ST) de détection à effectuer par un moyen (3) de capteur pendant l'exécution de la tâche (AT) d'automatisation et un nombre de paramètres (SP) de capteur du moyen (3) de capteur, le nombre de paramètres (SP) de capteur comprenant une ou plusieurs contraintes (CO) de détection du moyen (3) de capteur et le volume (SV) de capteur du moyen (3) de capteur, le procédé comprenant les stades de :
a) la détermination d'un volume (PV) de placement sur la base de la spécification (MS) de mouvement, dans lequel le volume (PV) de placement se trouve dans une zone déterminée à l'avance entourant le nombre de composants (1, 2), et dans lequel le volume (PV) de placement ne chevauche pas le nombre de composants (1, 2) et tout autre objet (4) pendant l'exécution de la tâche (AT) d'automatisation ;
b) la détermination d'un volume (SAV) de disposition d'un capteur définissant un volume de positions (PO) de capteur du moyen (3) de capteur, dans lequel le volume (SV) de capteur du moyen (3) de capteur se trouve, pour chaque position (PO) du capteur dans le volume (SAV) de disposition du capteur, complètement à l'intérieur du volume (PV) de placement, et dans lequel la tâche (ST) de détection peut être effectuée pendant l'exécution de la tâche (AT) d'automatisation à chaque position (PO) du capteur dans le volume (SAV) de disposition du capteur par le moyen (3) de capteur au regard du nombre de contraintes (CO) de détection.

2. Procédé suivant la revendication 1, dans lequel on identifie au moins une position (PO') du capteur dans le volume (SAV) de disposition du capteur, sur la base d'un ou de plusieurs critères d'optimisation.

3. Procédé suivant la revendication 1 ou 2, dans lequel le volume (SAV) de disposition du capteur et/ou la au moins une position (PO') du capteur sont sortis par l'intermédiaire d'une interface d'utilisateur.

4. Procédé suivant l'une des revendications précédentes, dans lequel le nombre de composants (1, 2) comprend au moins un robot (1) et/ou le moyen (3) de capteur comprend au moins un capteur optique, en particulier au moins une caméra, pour détecter un ou plusieurs objets (4) manipulés par le nombre de composants (1, 2).

5. Procédé suivant l'une des revendications précédentes, dans lequel la détermination du volume (SAV) de disposition du capteur sur la base du stade b) comprend les sous-stades suivants :
- la détermination d'un volume (IV) intermédiaire définissant un volume de positions de capteur du moyen (3) de capteur, dans lequel, à chaque position du capteur dans le volume (IV) intermédiaire, on peut effectuer la tâche (ST) de détection par le moyen (3) de capteur, au regard du nombre de contraintes (CO) de détection sans considérer le volume (PV) de placement ;
- la détermination de l'intersection (IS) entre le volume (IV) intermédiaire et le volume (PV) de placement ;
- la détermination comme volume (SAV) de disposition de capteur, la zone dans l'intersection (IS) où l'on peut effectuer la tâche (ST) de détection par le moyen (3) de capteur, au regard du nombre de contraintes (CO) de détection, en considérant le volume (PV) de placement, et dans lequel le volume (SV) de capteur se trouve complètement dans le volume (PV) de placement.

6. Procédé suivant l'une des revendications précédentes, dans lequel, dans le cas où on ne peut pas identifier au stade b) un volume (SAV) de disposition de capteur, on effectue les stades suivants :
- l'association au moyen (3) de capteur d'un mécanisme (7) mécanique pour déplacer le moyen (3) de capteur, le moyen (3) de capteur et le mécanisme (7) mécanique formant une plateforme (SEP) mobile de capteur, dans lequel on affecte un temps (OT) de fonctionnement à la plateforme (SEP) mobile de capteur, le temps (OT) de fonctionnement étant le temps pour faire passer le moyen (3) de capteur d'une première position à une deuxième position, qui est une position de détection, pour effectuer la tâche (ST) de détection par le moyen (3) de capteur dans la position de détection et pour faire revenir le moyen (3) de capteur à la position de repos ;
- la détermination d'un volume (MV) de mouvement de la plateforme (SEP) mobile de capteur, le volume (MV) de mouvement étant le volume couvert par la plateforme (SEP) mobile de capteur pendant le temps (OT) de fonctionnement de la plateforme (SEP) mobile de capteur ;
- la division de la tâche (AT) d'automatisation en une pluralité de sous-tâches (STi) subséquentes, chaque sous-tâche (STi) étant associée à un temps (STTi) de sous-tâche nécessaire pour exécuter la sous-tâches (STTi), dans lequel on effectue les stades suivants pour chaque sous-tâche (STi) ayant un temps (STTi) de sous-tâche supérieur ou égal au temps (OT) de fonctionnement de la plateforme (SEP) mobile de capteur :
- la détermination pour la sous-tâche (STi) respective d'un volume (SPVi) de placement de sous-tâche sur la base de la partie de la spécification (MS) de mouvement, qui décrit le mouvement du nombre de composants (1, 2) pendant l'exécution de la sous-tâche (STi) respective, dans lequel le volume (SPVi) de placement de sous-tâche se trouve dans la zone déterminée à l'avance entourant le nombre de composants (1, 2), et dans lequel le volume (SPVi) de placement de sous-tâche ne chevauche pas le nombre de composants (1, 2) et tout autre objet (4) pendant l'exécution de la sous-tâche (STi) respective ;
- la détermination d'une ou de plusieurs positions (MP) de montage de la plateforme (SEP) mobile de capteur, dans lequel, à chaque position (MP) de montage, le volume (MV) de mouvement de la plateforme (SEP) mobile de capteur se trouve complètement dans le volume (SPVi) de placement de sous-tâches respectif et on peut effectuer la tâche (ST) de détection pendant l'exécution de la sous-tâche (STi) respective par le moyen (3) de capteur, au regard du nombre de contraintes (CO) de détection.

7. Procédé suivant la revendication 6, dans lequel on identifie au moins une position (MP) de montage dans la une ou plusieurs positions (MP) de montage déterminées sur la base d'un ou de plusieurs critères d'optimisation.

8. Procédé suivant la revendication 6 ou 7, dans lequel on sort, par l'intermédiaire d'une interface d'utilisateur, la une ou les plusieurs positions (MP) de montage déterminées pour une ou plusieurs sous-tâches (STi) et/ou la au moins une position (MP) de montage identifiée.

9. Procédé suivant l'une des revendications précédentes, dans lequel le système d'automatisation est un système de production ou une usine d'emballage ou un système logistique.

10. Installation de détermination, mise en oeuvre par ordinateur, de positions (PO) de capteur dans une opération (PR) simulée d'un système d'automatisation, dans lequel l'opération (PR) simulée comprend une description (PD) numérique de l'opération d'une tâche (AT) d'automatisation à exécuter par un certain nombre de composants (1, 2) du système d'automatisation,
caractérisé dans
la description (PD) de l'opération comprenant une spécification (MS) de mouvement décrivant le mouvement du nombre de composants (1, 2) pendant l'exécution de la tâche (AT) d'automatisation, et dans laquelle il est prévu une description (SD) numérique de détection, la description (SD) de détection définissant une tâche (ST) de détection à effectuer par un moyen (3) de capteur pendant l'exécution de la tâche (AT) d'automatisation et un nombre de paramètres (SP) de capteur du moyen (3) de capteur, le nombre de paramètres (SP) de capteur comprenant une ou plusieurs contraintes (CO) de détection du moyen (3) de capteur et le volume (SV) de capteur du moyen (3) de capteur, l'installation étant configurée pour effectuer un procédé comprenant les stades :
a) la détermination d'un volume (PV) de placement sur la base de la spécification (MS) de mouvement, dans lequel le volume (PV) de placement se trouve dans une zone déterminée à l'avance entourant le nombre de composants (1, 2), et dans lequel le volume (PV) de placement ne chevauche pas le nombre de composants (1, 2) et tout autre objet (4) pendant l'exécution de la tâche (AT) d'automatisation ;
b) la détermination d'un volume (SAV) de disposition d'un capteur définissant un volume de position (PO) du capteur du moyen (3) de capteur, dans lequel le volume (SV) de capteur du moyen (3) de capteur se trouve, pour chaque position (PO) du capteur dans le volume (SAV) de disposition du capteur, complètement à l'intérieur du volume (PV) de placement, et dans lequel la tâche (ST) de détection peut être effectuée pendant l'exécution de la tâche (AT) d'automatisation à chaque position (PO) du capteur dans le volume (SAV) de disposition du capteur par le moyen (3) de capteur au regard du nombre de contraintes (CO) de détection.

11. Procédé suivant la revendication 10, dans lequel l'installation est configurée pour effectuer un procédé suivant l'une des revendications 2 à 9.

12. Produit de programme d'ordinateur ayant un code de programme, qui est mis en mémoire sur un support déchiffrable par ordinateur pour effectuer un procédé suivant l'une des revendications 1 à 9, lorsque le code de programme est exécuté sur un ordinateur.

13. Programme d'ordinateur ayant un code de programme pour effectuer un procédé suivant l'une des revendications 1 à 9, lorsque le code de programme est exécuté sur un ordinateur.
